(19) Europäisches Patentamt
European Patent Office
Office européen des brevets

(11) Publication number: **0 009 240**
**B1**

(12) # EUROPEAN PATENT SPECIFICATION

(45) Date of publication of patent specification: **14.08.85**

(21) Application number: **79103529.8**

(22) Date of filing: **19.09.79**

(51) Int. Cl.$^4$: **D 06 M 15/427,**
D 06 M 13/20, D 06 P 1/00,
B 01 F 17/00, C 09 B 67/00,
C 08 J 9/30

(54) **Foam composition for treating textile materials.**

(30) Priority: **19.09.78 US 943830**

(43) Date of publication of application:
**02.04.80 Bulletin 80/07**

(45) Publication of the grant of the patent:
**14.08.85 Bulletin 85/33**

(84) Designated Contracting States:
**BE FR IT**

(56) References cited:
**DE-A- 853 697**
**FR-A-2 080 685**
**GB-A-1 134 221**
**US-A-2 971 458**
**US-A-4 099 913**

(73) Proprietor: **United Merchants and Manufacturers, Inc.**
**1407 Broadway**
**New York, N.Y. 10018 (US)**

(72) Inventor: **Razmic, Gregorian S.**
**165 Bridle Wood Drive**
**Aiken South Caroline 29801 (US)**
Inventor: **Chettoor, Namboodri G.**
**1911 Pisgah Road**
**North Augusta South Carolina 29841 (US)**

(74) Representative: **Weickmann, Heinrich, Dipl.-Ing. et al**
**Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820**
**D-8000 München 86 (DE)**

**EP 0 009 240 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to the field of treating textile fabrics with fabric finishing agents, and more particularly, to foamable compositions for applying fabric finishing agents to textile products.

Conventionally, treatment of textile fabrics with finishing agents, e.g., coloring agents or dyes, resins, and the like, has involved a procedure wherein the finishing agent is either dissolved or dispersed in a suitable liquid medium, such as an aqueous or organic liquid, and then the mixture of the finishing agent and liquid medium are applied to the fabric. Thereafter, the carrier is removed from the fabric, usually by evaporation with or without heat. It is further conventional to use small amounts of the finishing agent, relative to the amount of liquid medium in order to conserve the amount of the finishing agent used. This produces relatively large amounts of liquid medium which must be removed from the fabric. Consequently, a substantial amount of the cost incurred in such processes resides in the liquid medium removal step.

Such liquid media present a further problem in that after removal, the liquid must either be disposed of or recovered for re-use. In the case of an aqueous treatment system wherein the liquid media is water, the water is normally disposed of as waste. In recent years, the environmental problems associated with the disposal of the water and residual finishing agents therein have become increasingly prevelant.

With respect to organic solvents as the liquid medium, it is normally desirable to recover them because of their relatively high cost. Recovery systems for this procedure add to the expense of the overall treatment process. Moreover, disposal of the solvent, if it is not recovered, may cause environmental contamination.

The foregoing problems become even more pronounced when treating textile fabrics which are highly absorbent. Thus, for example, when it is desired to treat or finish pile fabrics, e.g., carpeting, sliver knit fabrics, and the like, the fabrics have a tendency to absorb great quantities of the water or organic solvent, thus making the liquid removal step even more difficult and expensive. Additionally, because of the relatively large absorption of the liquid, the weight of the wet fabric which is being handled increases significantly.

U.S. Patent 4 099 913 describes foams containing a textile treating compound for application to a fabric substrate. These foams have a very short half-life, and therefore break immediately upon contact with the fabric substrate, i.e., the foams do not have sufficient stability to maintain the foamed state until the foam is forced through the fabric in order to achieve even and thorough penetration.

In U.S. Patent 4 118 526 (= BE—Patent 853 697) there is described a novel process for the application of fabric finishing agents to textile fabrics which substantially reduces the large amount of liquid medium utilized in conventional processes. The amount of finishing agent required to produce the desired finishing effect on the fabric, is incorporated in a foamable composition capable of forming a stable foam having a blow ratio in the range of from 2:1 to 20:1. The composition is converted to a foam and coated onto the fabric and is thereafter compressed, padded and/or vacuumed to achieve penetration of the foam through the fabric. The so-treated fabric is then dried and, if necessary, cured or fixed in a conventional manner.

Although the process of the U.S. Patent 4 118 526 represents a significant advance in the textile treatment arts, further improvement may be achieved, such as in the nature of the particular composition to be used. For instance as was the case with liquid medium systems, the use of excess carrier medium is undesirable. Thus, in a foamable composition, usage of excess foaming agent results in an additional cost factor and may have adverse effects on finish durability. Likewise, further improvement may be achieved in the control of the foaming step and in the desire to reduce the cost of shipping, storage and the like necessarily associated with foamable compositions which typically contain large amounts of water or other liquid medium.

Summary of the Invention

Briefly stated, the present invention is directed to a foamable composition for treating fabrics with a finishing agent and which is capable of being formed into a foam which is sufficiently stable to substantially retain its characteristics during application. Included in the composition is an amount of fabric finishing agent sufficient to impart the desired finish to the fabric. A foaming system, consisting of a foaming agent and optionally a foam stabilizer and thickener, each or both in combination with the foaming agent, in an amount up to 10 percent by weight is included, the weight ratio of active solids to that of foaming agent being at least 8:1. Preferably, the ratio is between 10:1 and 2000:1. Further, it is preferred that the amount of foaming agent is less than 2.0 percent. With a minimum amount of foaming agent in the composition, adverse effects of finish durability such as those caused by excessive foaming agent, are avoided. Further, costs are reduced in that excess foaming agent is avoided which not only reduces the composition cost but also eliminates the need to employ additional means to remove the excess foaming agent from the fabric.

According to another aspect of the invention, the composition is provided as a concentrate capable of forming a stable foam upon stirring the concentrate with a liquid medium added thereto. The concentrate composition is an intimate mixture of a foaming agent, a foam stabilizer and/or thickener.

The substantially liquid-free foam precursor composition enables greatly reduced storage and shipping costs owing to the vastly decreased bulk of the compositions as compared to liquid-containing

foamable compositions. Moreover, the substantially liquid-free compositions possess the advantage of precluding any physical or chemical change in the foamable composition with might otherwise result in liquid compositions permitted to stand for any substantial time after preparation and prior to foaming. Still further, the compositions permit more controlled and varied foaming than liquid-containing compositions in that the ultimate foam blow ratio and density and other properties may be varied correlatively by variation of the amount of liquid medium added to the composition before stirring.

In accordance with this invention, foaming agents which may be utilized include materials selected from the following groups of compounds. In the chemical formulas given, M is a cation of group I of the Periodic System of Elements (e.g., sodium, potassium) or a radical of the formula $NR_4+$ wherein R is selected from the group consisting of hydrogen and lower alkyl; and X is a sulfur or phosphorous derivative of the formula:

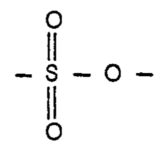
or
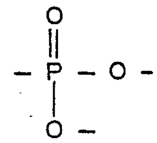

1. Salts of fatty acids represented by the formula:

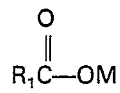

wherein $R_1$ is a hydrocarbon radical of the formula $C_nH_{2n+1}$, $C_nH_{2n-1}$ or $C_nH_{2n-3}$ and n is an integer from 12 to 24. Examples of such materials are ammonium stearate, potassium stearate, ammonium oleate and ammonium ricinoleate.

2. Salts of inorganic esters of aliphatic alcohols represented by the formula:

$$R_2—CH_2\ OXM_m$$

wherein $R_2$ is a hydrocarbon radical $C_nH_{2n+1}$ (wherein n is an integer from 11 to 23) and m is either 1 or 2. Examples of such materials are ammonium lauryl sulfate, sodium tetradecyl sulfate and the sodium salt of the phosphate ester of tridecyl alcohol.

3. Salts of inorganic esters or oxyalkylated aliphatic alcohols of the formula:

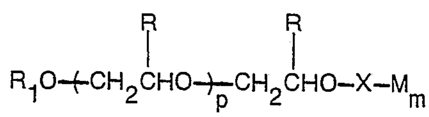

wherein p is an integer from 0 to 50 and R, $R_1$, X, M and m are as previously defined. Commercially available examples of such materials are Alfonic ester sulfate (Conoco chemicals) and Alipal CD-128 (GAF Corp.).

4. Salts of organic esters of oxyethylated higher alkyl phenols of the formula:

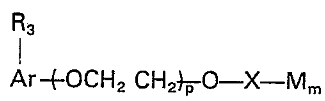

wherein $R_3$ is a higher alkyl of $C_nH_{2n+1}$ (n = 8 to 14), Ar is phenyl or naphthyl, and X, M, m and p are as previously defined. Such products are commercially available under the tradenames Alipal CO-433 and Alipal CO/436 (GAF Corp.).

5. Salts of substituted sulfosuccinates represented by the formula

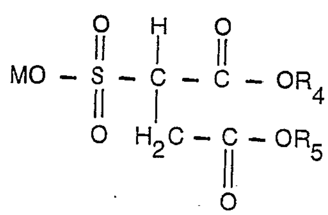

wherein $R_4$ is a higher alkyl, an ethoxylated higher alkyl or an ethoxylated alkylphenyl, and $R_5$ is $R_4$ or M. Commercially available examples of these compounds, from American Cyanamid, are Aeroxol OT, Aerosol A-102 and Aerosol A-103.

6. Salts of N substituted sulfosuccinamates of the formula:

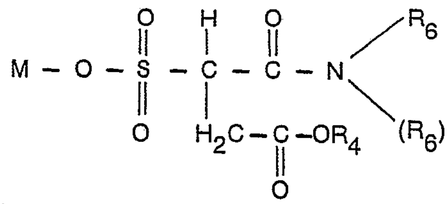

wherein $R_6$ is a higher alkyl, and $R_4$ is higher alkyl, ethoxylated higher alkyl or ethoxylated alkylphenyl. An example of such a material is Aerosol-18 (American Cyanamid).

7. Block and graft copolymers of polyoxyalkyl and polydialkylsiloxy groups of the formula:

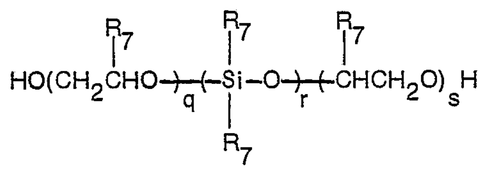

wherein $R_7$ is a lower alkyl and q, r and s are integers from 2 to 100, or

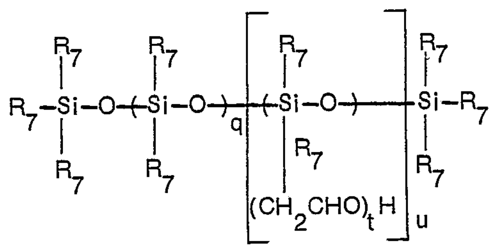

where t and u are integers from 2 to 100, and $R_7$ and q are as defined above. An exemplary material is Silicone 471-A (Dow Corning).

8. Salts of sulfonated paraffin hydrocarbons of the formula:

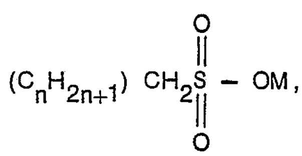 $n = 11$ to 23,

such as Alkanol 189-S (duPont).

9. Salts of sulfonated higher alkyl aromatic hydrocarbons represented by

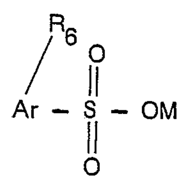

wherein Ar and $R_6$ are as earlier defined, for example, the sodium salt of dodecylbenzene sulfonic acid.

10. Oxyalkylated higher alkyl phenols of the formula

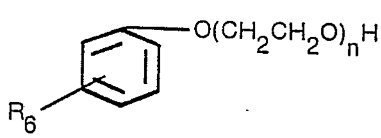

wherein n is an integer from 10 to 100 and $R_6$ is as previously defined. Examples of such compounds are Igepal CO-210 and RC-630 (GAF Corp).

11. Alkyltrimethylammonium halides of the formula:

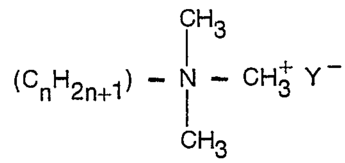

wherein n is an integer from 6 to 24 and Y is a hologen such as Cl or Br. Suitable materials are the trimethyltallow ammonium chlorides (available from Onyx Chemical Co.).

12. Alkyl amine oxides of the formula:

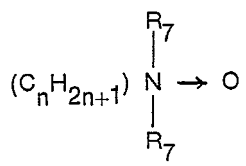
, n = 12 to 24

such as Barlox 10 S and Barlox 14 (Lonza Chem. Co.) and Textamine Oxide CA (Textilana Corp.).

13. Alkyl pyridinium halides of the formula:

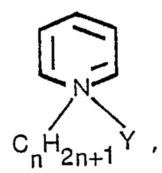
, n = 12 to 24

such as Cetyl pyridinium bromide (Aceto Chem. Co.).

14. Alkyl morpholinium halides represented by

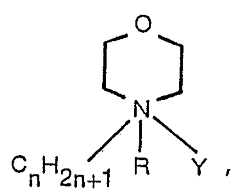
, n = 12 to 24,

such as Atlas G 271 (ICI).

15. Condensation products of fatty acids with 1 or 2 moles of a primary or secondary alkanolamines. For example, these products are complex mixtures known as Kritchevsky bases. Suitable materials within this group are Valdet CC (Valchem).

16. Condensation products of fatty acids and ethylene amines and substituted ethylene amines of the formula, for example,

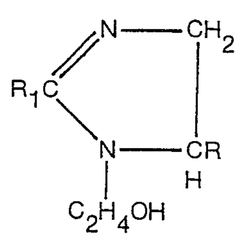

such as Amine 220 (Union Carbide) and Antaron MC-44 (GAF Corp.).

17. Block copolymers of propylene oxide and ethylene oxide represented by

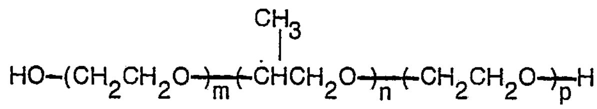

or

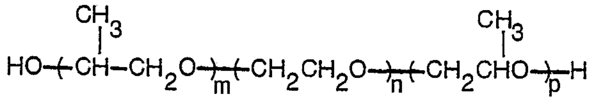

wherein m, n and p are integers from about 10 to 100. Exemplary materials are the family of compounds known as Pluronics from Wyandotte Chem. Co.

18. Fatty acid betaines of the formula

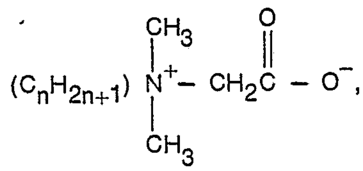

$n = 12$ to $24$

such as Alkateric CAB (Alkard Chemicals).

19. Fluorocarbon surfactants such as the family of Zonyl surfactants (anionic, cationic, nonionic) (duPont) and Fluorad surfactants (3M Co.).

20. Oxyalkylated aliphatic alcohols of the formula

$$C_nH_{2n+1}\,O(CH_2CH_2O)_mH, \qquad n = 8 \text{ to } 24, \; m = 1 \text{ to } 100$$

such as Alfonic 1218—60. Emulphogene BC420, Valdet 4016 or Siponic E-3.

Foam stabilizers may also be used in conjunction with the noted foaming agents to obtain added foamstability. Auxiliary foam stabilizers include lauryl alcohol, sodium laurate, lower aliphatic alochols, dodecyl alcohol, lower aliphatic acids, lauric acid, fatty acids, hydrophilic polymers, such as, agar, polyvinyl alcohol and sodium alginate and blends of these compounds.

Suitable thickeners for admixture with the foaming agent or stabilizer in order to form a paste-like mass therewith include polyacrylic acid, copolymers of acrylic acid, polyvinyl alcohol, natural gums, starches, starch derivatives, cellulose derivatives, synthetic polymeric compounds, water soluble polymers, organic solvent soluble polymers and blends of these compounds. Preferred among these thickeners are cellulosic derivatives such as methylcellulose, hydroxyethylcellulose, and the like.

When using the concentrate, the thickener and foaming agent are pre-pasted in ratios which may vary widely according to the desired characteristics of the foam ultimately obtained. In general, suitable mixtures are prepared with about 10—90% by weight thickener to about 90—10% foam stabilizer, preferably in weight ratios of 25:1 to about 3:1 foam stabilizer to thickener.

Additional materials such as emulsifiers, pH adjusting additives such as acids or bases, and the like may be added to the paste-like concentrate. The textile finishing agents themselves, such as dyes, water repellents, antistats, weighting agents etc. may also be incorporated with the thickener and foaming agent in forming the paste-like foamable precursor concentrate.

One of the advantages of adding the finishing agent during the foaming step is the ability to utilize the thickener/foaming agent precursor composition as a universal carrier system for all such textile finishing agents. Thus, any desired finishing agent may simply be added to the composition along with the addition of liquid medium and then stirred or whipped into a foam for application to textile fabrics.

Typical liquid media which may be added to the concentrate composition to form a foam include water, perchloroethylene, methanol, trichloroethylene, and other conventional solvents, e.g., chlorinated hydrocarbons and aliphatic and aromatic hydrocarbon and petroleum solvents.

Generally, the composition of the present invention, after the addition of liquid medium, is capable of being stirred or whipped into a foam having a blow ratio in the range from 2:1 to 20:1, and preferably, from 2:1 to 10:1. The blow ratio is determined by measuring the weight of a given volume of a foam compared to the weight of the same volume of the composition prior to foaming. The foam density range is generally from 0,5 $g/cm^3$ to 0,05 $g/cm^3$ and preferably, from 0,5 to 0,1 $g/cm^3$.

Upon the addition of a liquid medium to the paste-like foam concentrate or precursor, the resulting foamable composition typically contains from 0,01 to 10% by weight of foaming agent, up to 5% and preferably, .01 to 5% thickener, to which is added from up to 95% by weight of the appropriate fabric finishing agent.

In order to be suitable for use in treating textile materials, it is important that the foam be sufficiently stable so that it does not collapse between the time when the initial foaming takes place and the time when

it is introduced into the fabric. Moreover, the amount of foaming agent present in the composition is important. As indicated, it is preferred that the amount of foam in the composition is less than 2.0 percent and the ratio of active solids to foaming agent be in the range of 15:1 to 2000:1. This insures a uniform application of the finishing agent without any adverse effects as to the durability of the finish.

Accordingly, it is an object of this invention to provide a foamable composition suitable for treating fabrics with a finishing agent, the treated fabric possessing a finish of suitable durability.

It is another object of this invention to provide a foamable composition for treating fabrics with a finishing agent in which the amount of foaming agent with respect to solid materials is suitable for effective treatment of textile fabrics with finishing agent.

It is a further object of this invention to provide a foam composition for treating fabrics with a finishing agent which reduces shipping, storage and associated costs.

It is a still further object of this invention to provide a foam composition for treating fabrics with a finishing agent in the form of concentrate capable of forming a stable foam upon stirring the concentrate with a liquid medium added thereto.

Description of the Preferred Embodiment

Specific embodiments of the foamable composition of the present invention and the method of its preparation and application are described in more detail with reference to the Examples which follow.

In the examples parts, ratios and percents are, unless otherwise stated, by weight.

Example 1

Durable Press Finish

A foamable durable press resin composition was prepared by mixing 35 parts of Valrez 248 (a modified glyoxal resin — 38% solids), 2 parts of a textile softener Valsof PE (a polyethylene emulsion — 26% solids of which 6.2% is emulsifier), 2 parts of a dye fixative Valfix FST (a formaldehyde dicyanamide condensate — 35% solids), 4 parts Valmel HM (a melamine resin — 62% solids) and 9 parts Valcat 7 (a magnesium chloride catalyst — 21% solids). This basic finish formulation contained 18.8 parts active solids. To the composition was added a foaming agent in the amount of 0.2 parts 471-A silicone fluid (a silicone polyglycol copolymer) to form a paste like substantially liquid admixture of foam stabilizer and finishing agent. To this was added 47.8 parts of water. The ratio of active solids to total foamer for the composition was 58.2:1.

The concentration of foamer used to calculate the active solids to total foamer ratio in each of the Examples includes the amount of foaming agent added as well as any emulsifiers present in other components of the formulation.

This composition was then foamed using a kitchen mixer to a blow ratio of 5:1. The foam was knife coated on to a 50/50 blend of polyester/cellulose fabric. The fabric was padded at 45, 35 kg (100 pounds) per linear 2,54 cm (inch) and the wet pick-up calculated as approximately 30 percent.

In another sample, Valsof PE was omitted, 0.01 parts of 471-A silicone fluid (silicone polyglycol copolymer) was added to the diluted finishing composition and then foamed using a mechanical foamer (Oakes foamer) to a 20:1 blow ratio. The foam was again knife coated on to a 50/50 blend of polyester/cellulose fabric. For this composition, the ratio of active solids to total foamer was 1840:1.

In each case the fabric was then dried at 115,5°C (240°F) for 2 minutes and cured at 171°C (340°F) for 90 seconds. The fabric possessed a good resilient hand with a DP rating (durable press) of 3.8. The resulting fabric's wicking behavior was found to be superior to that of cloth fabrics treated with traditional resin compositions.

Example 2

Durable Press Finish

A basic finish formation was prepared by mixing 26.1 parts Valrez 248 (a modified glyoxal resin — 38% solids), 6.8 parts Valbond 6021 (an acrylic copolymer — 45% solids), 5.1 parts Valcat 7 (a magnesium chloride catalyst — 21% solids), 2.0 parts Penford Gum (starch — 100% solids) and 3.1% Valsof FNS (pentaerythritol distearate — 16% solids). To this paste-like concentrate was added 55.9 parts water. This basic finish formulation contained 16.2 parts active solids.

A hand builder/durable press finish foamable formulation was prepared from 99 parts of the above described basic finish formulation 1 part of Antaron FC-34, a 38% solids fatty acid imidazoline manufactured by the GAF Corporation. The ratio of active solids to total foamer for the composition was 22:1.

The formulation was foamed to a 9 to 1 blow ratio and applied by means of a knife coater to a dyed 50/50 polyester/cotton fabric. A 0.0254 cm (10 mil) coating was applied to the fabric.

The foamed coated fabric was passed through a vertical padder in order to compress and collapse the foam.

The fabric wet pick-up was 25%. The fabric was then dried and cured in the conventional manner: drying time 2 minutes at 115,5°C (240°F) and curing time 90 seconds at (340°F) 171°C.

The resulting fabric possessed a soft but resilient hand. The fabric was stabilized to shrinkage and the dye was fixed.

In conventional finishing, the basic finish formulation would be diluted three fold and the fabric passed through a bath picking up about 100% of its weight of the bath. Usage of the composition described herein produces a dramatic reduction in water consumption and the energy required to subsequently remove this water.

Example 3

To 99 parts of the basic finish formulation of Example 2 was added 1 part of Alipal CO-433, a 28% solids solution of the sodium salt of a sulfated nonylphenoxypoly (ethyleneoxy) ethanol. The ratio of active solids to total foamer for the composition was 25.5:1.

The formulation was foamed and applied to a polyester/cotton fabric as in Example 2.

The finished fabric had a soft and somewhat drapy hand and was stabilized to shrinkage and the dye fixed as in Example 2.

Similar results were obtained where the Alipal CO-433 was replaced by Valdet CC, a fatty acid diethanolamide available from Valchem. The ratio of active solids to total foamer for the composition using Valdet CC was 11.8:1.

Example 4

A foamable composition was prepared from 99 parts of basic finish formulation of Example 2 and 1 part of Valdet CC, a 100% solids fatty acid diethanolamide. The ratio of active solids to total foamer for the composition was 11.8:1.

The finish was foamed to an 8 to 1 blow ratio. A 10 mil coating of the foam was applied by means of a knife coater to the face side of a pigment printed polyester/cotton fabric. The wet pick-up was 30%.

The fabric was passed through a vertical pad to compress and collapse the foam and dried and cured on a frame. The fabric was dried at 115,5°C (240°F) for 5 minutes and cured at 171°C (340°F) for 2 minutes.

The finished fabric possessed a shrinkage rating of less than 1% in both fill and warp directions. The fabric had a soft but full hand, and good crocking properties. The sharp print definition was maintained.

Example 5

A basic finish formulation was prepared by mixing 35 parts Valrez 248 (a modified glyoxal resin — 38% solids), 2 parts Valsof PE (a polyethylene emulsion — 26% solids), 2 parts Valfix FST (a formaldehyde condensate — 35% solids), 4 parts Valrez HM (a melamine resin — 62% solids) and 9 parts Valcat 7 (a magnesium chloride catalyst — 21% solids). To this paste-like concentrate was added 47 parts water. This basic finish formulation contained 18.8 parts active solids.

A foamable composition consisting of 99 parts of the basic finish formulation above described and 1 part of Valded-4016, an 80% solids ethoxylated decylalcohol manufactured by Valchem, was prepared. The ratio of active solids to total foamer for the composition was 20:1.

The composition was foamed to an 18 to 1 blow ratio and applied by means of a knife coater to a dyed 50/50 polyester/rayon fabric. A 0,0381 cm (15 mil) coating was applied to the fabric. The wet pick-up was 28%.

The fabric was passed through a vertical padder to compress and collapse the foam. The fabric was stretched in the fill direction by 7% and the fabric dried and cured as in Example 2.

The finished fabric possessed a soft and springy hand and the shrinkage in the warp and fill directions after machine laundering was less than 1% indicating effective stabilization of the fabric by the finish. The D.P. rating was 4.

Example 6

Foamable compositions were prepared from 99 parts of basic finish formulation of Example 5 and 1 part of the following foaming agents:

Igepal CO-887, a 70% solids solution on a polyethoxylated nonylphenol available from the GAF Corporation. The ratio of active solids to total foamer for the composition was 22.5:1.

Valwet CSP, a phosphated alcohol available from Valchem. The ratio of active solids to total foamer for the composition was 39.2:1.

Valdet-561, an ethoxylated nonylphenol available from Valchem. The ratio of active solids to total foamer for the composition was 16.5:1.

These formulations were foamed and applied to 50/50 polyester/rayon fabrics in a manner similar to that described in Example 5.

The fabrics were effectively stabilized to shrinkage. The fabrics possessed a soft hand but somewhat less resilience than the fabric in Example 5.

Example 7

A basic finish formulation was prepared by mixing 35 parts Valrez 248 (a modified glyoxal resin — 38% solids), 2 parts Valsof PE (a polyethylene emulsion — 26% solids), 2 parts Sandofix WE (a direct dye fixative manufactured by Sandoz — 35% solids), 4 parts Valrez HM (a melamine resin — 62% solids) and 9 parts Valcat 7 (a magnesium chloride catalyst — 21% solids). To this paste-like composition was added 47 parts water. This basic finish formulation contained 18.8 parts solids.

A foamable composition was prepared from 99 parts of basic finish formulation described above and 1 part of Carsonam 3, a 35% solids coca-betaine. The ratio of active solids to total foamer for the composition was 39.2:1.

The composition was foamed and applied to a pigment printed fabric as in Example 4.

The fabric was stabilized to shrinkage and possessed a desirable soft hand.

Example 8

A mixture of 100 parts dioctyl phthalate and 2 parts Fluorad FC-430, a fluorocarbon surfactant available from the 3M Corporation was mechanically foamed to a 2.5:1 blow ratio. The foam composition was applied via a knife coater onto the foam side of a foam backcoated fabric. The coating thickness was 0,0127 cm (5 mils) and the ratio of active solids to total foamer was 50:1.

The coated fabric was passed through a vertical pad to collapse the foam and heated in an oven for 4 minutes at (250°F) 121°C.

The hand of the fabric was significantly softened by the application of the foamed dioctyl phthalate.

**Claims**

1. A foamable composition which is capable of being formed into a foam suitable for treating fabrics with a finishing agent which comprises a predetermined amount of fabric finishing agent sufficient to impart the desired finish to the fabric and up to 10 percent by weight of foaming agent and having a weight ratio of active solids to that of the total foaming agent of at least 8:1, characterized in that the foamable composition is capable of being formed into a foam which is sufficiently stable to substantially retain its characteristics during application to the fabric and not collapse between the time when the initial foaming takes place and the time when the foam is introduced into the fabrics.

2. A foamable composition in accordance with claim 1 wherein said foaming agent is part of a foaming system which further includes a foam stabilizer and/or thickener therein.

3. A foamable composition in accordance with claim 2 wherein the weight ratio of active solids to said foaming system is between 10:1 and 2000:1.

4. A foamable composition in accordance with claim 2 wherein the percent by weight of said foaming system is less than 2.0 percent.

5. A foamable composition in accordance with claim 1 wherein said composition is capable of being formed into a foam having a blow ratio in the range of from 2:1 to 20:1 and a foam density in the range of 0.5 g/cm$^3$ to 0.05 g/cm$^3$.

6. A foamable composition in accordance with claim 1 wherein said foaming agent is selected from salts of fatty acids represented by the formula:

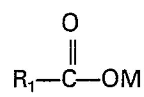

wherein $R_1$ is a hydrocarbon radical of the formula $C_nH_{2n+1}$, $C_nH_{2n-1}$ or $C_nH_{2n-3}$, n is an integer from 12 to 24, and M is a cation of group I of the Periodic System oxyalkylated higher alkyl phenols of the formula:

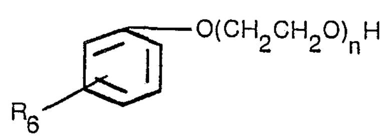

wherein n is an integer from 10 to 100 and $R_6$ is a higher alkyl, and salts of oxyalkylated aliphatic alcohols of the formula:

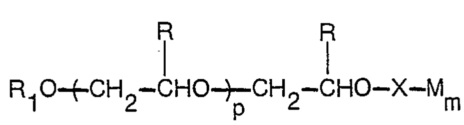

wherein p is an integer from 0 to 50, R is hydrogen or lower alkyl, X is a sulfur or phosphorous derivative of the formula:

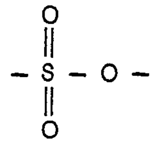 or 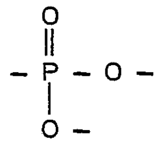

m is either 1 or 2 and $R_1$ and M are as previously defined.

7. A foamable composition in accordance with claim 1 wherein said foaming agent is selected from block and graft copolymers of polyoxyalkyl and polydialkylsiloxy groups of the formula:

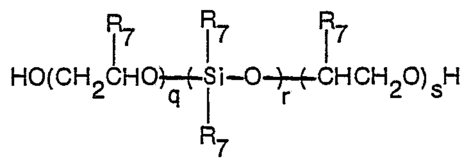

wherein $R_7$ is a lower alkyl and q, r and s are integers from 2 to 100, or

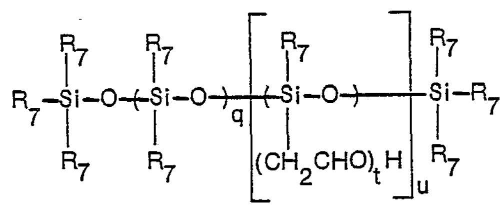

where t and u are integers from 2 to 100, and $R_7$ and q are as defined above.

8. A foamable composition in accordance with claim 1 wherein said foaming agent is a fluorocarbon surfactant.

9. A foamable composition in accordance with claim 2 wherein said thickener comprises a cellulosic derivative.

10. A foamable composition in accordance with claim 1 wherein said composition comprises a substantially liquid free admixture capable of foaming upon the addition of a liquid medium.

11. A concentrate composition for forming a foam suitable for foam dyeing, finishing or printing which comprises a substantially liquid free admixture of a foam system and finishing agent, characterized in that the foaming system consists of a foaming agent, a foam stabilizer and/or thickener, the weight ratio of active solids to that of said foaming system being at least 8:1, and said composition being capable of being formed into a foam which is sufficiently stable to substantially retain its characteristics during application to the fabric and not collapse between the time when the initial foaming takes place and the time when the foam is introduced into the fabrics.

12. A concentrate composition in accordance with claim 11 wherein the ratio of active solids to said foaming system is between 10:1 and 2000:1.

13. A concentrate composition in accordance with claim 11, wherein the weight percent of said foaming system is such, that in the foamable composition resulting from the concentrate composition by adding a liquid medium the weight percent of the foaming system is less than 2.0.

14. A concentrate composition in accordance with claim 11 wherein said concentrate is capable of being formed into a foam having a blow ratio in the range of from 2:1 to 20:1 and a foam density in the range from 0.5 g/cm$^3$ to 0.05 g/cm$^3$.

15. A concentrate composition in accordance with claim 11 wherein said foaming agent is selected from alkyl amine oxides of the formula:

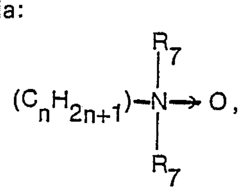 , n = 12 to 24

wherein $R_7$ is lower alkyl, and fatty acid betaines of the formula

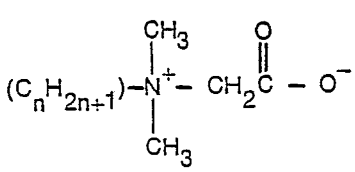

wherein n is 12 to 24.

16. A concentrate composition in accordance with claim 11 wherein said foaming agent is selected from salts of fatty acids represented by the formula:

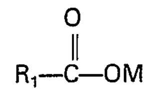

wherein $R_1$ is a hydrocarbon radical of the formula $C_nH_{2n+1}$, $C_nH_{2n-1}$ or $C_nH_{2n-3}$, n is an integer from 12 to 24, and M is a cation of group I of the Periodic System, oxyalkylated higher alkyl phenols of the formula:

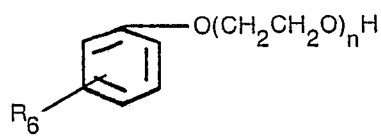

wherein n is an integer from 10 to 100 and $R_6$ is a higher alkyl, and salts of oxyalkylated aliphatic alcohols of the formula:

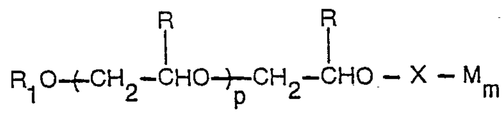

wherein p is an integer from 0 to 50, R is hydrogen or lower alkyl, X is a sulfur or phosphorous derivative of the formula:

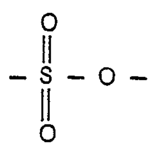
or
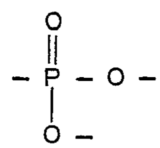

m is either 1 or 2, and $R_1$ and M are as previously defined.

17. A concentrate composition in accordance with claim 11 wherein said foaming agent is selected from block and graft copolymers of polyoxyalkyl and polydialkylsiloxy groups of the formula:

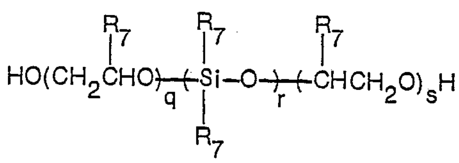

wherein $R_7$ is a lower alkyl and q, r and s are integers from 2 to 100, or

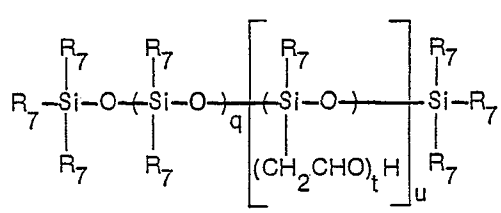

where t and u are integers from 2 to 100, and $R_7$ and q are as defined above.

18. A concentrate composition in accordance with claim 11 wherein said foaming agent is a fluorocarbon surfactant.

19. A method of forming a concentrate composition according to any one of claims 11 to 18, characterized in that a foaming agent and the desired agent are mixed into a substantially liquid-free admixture which upon the addition of a liquid medium and foaming forms a stable foam suitable for dyeing, finishing or printing textile materials, said mixture having a weight ratio of active solids to that of said foaming system of at least 8:1, said foaming agent being a part of said foaming system which further includes a foam stabilizer and/or thickener therein.

**Patentansprüche**

1. Schäumbare Zusammensetzung, die in einen Schaum überführt werden kann, der zur Behandlung von Textilmaterialien mit einem Appreturmittel geeignet ist, enthaltend eine bestimmte Menge eines Gewebeappreturmittels, die ausreicht, um dem Gewebe die gewünschte Appretur zu verleihen, und bis zu 10 Gew.-% eines Schaummittels, und die ein Gewichtsverhaltnis von aktiven Feststoffen zum gesamten Schaummittel von mindestens 8:1 besitzt, dadurch gekennzeichnet, daß die schäumbare Zusammensetzung in einen Schaum überführt werden kann, der ausreichend stabil ist, um seine Eigenschaften während der Applikation auf das Gewebe im wesentlichen beizubehalten und innerhalb der Zeit, zu der das anfängliche Schäumen erfolgt, un der Zeit, zu der der Schaum in das Gewebe eingebracht wird, nicht zusammenbricht.

2. Schäumbare Zusammensetzung nach Anspruch 1, dadurch gekennzeichnet, daß das Schaummittel Teil des schäumenden Systems ist, das weiters einen Schaumstabilisator und/oder Verdickungsmittel enthält.

3. Schäumbare Zusammensetzung nach Anspruch 2, dadurch gekennzeichnet, daß das Gewichtsverhältnis von aktiven Feststoffen zum schäumenden System zwischen 10:1 und 2000:1 liegt.

4. Schäumbare Zusammensetzung nach Anspruch 2, dadurch gekennzeichnet, daß der Gewichtsprozentgehalt des schäumenden Systems weniger als 2,0% beträgt.

5. Schäumbare Zusammensetzung nach Anspruch 1, dadurch gekennzeichnet, daß die Zusammensetzung in einen Schaum überführt werden kann, der ein Aufblasverhältnis im Bereich von 2:1 bis 20:1 besitzt und eine Schaumdichte im Bereich von 0,5 g/cm$^3$ bis 0,05 g/cm$^3$.

6. Schäumbare Zusammensetzung nach Anspruch 1, dadurch gekennzeichnet, daß das Schaummittel ausgewählt ist aus Salzen oder Fettsäuren der Formel

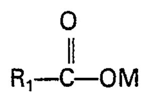

worin $R_1$ ein Kohlenwasserstoffradikal der Formel $C_nH_{2n+1}$, $C_nH_{2n-1}$ oder $C_nH_{2n-3}$ ist, n eine ganze Zahl von 12 bis 24, und M ein Kation der Gruppe I des Periodischen Systems, oxyalkylierten höheren Alkylphenolen der Formel:

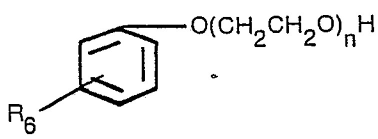

worin n eine ganze Zahl von 10 bis 100 und $R_6$ ein höheres Alkyl ist, und Salzen von oxyalkylierten aliphatischen Alkoholen der Formel:

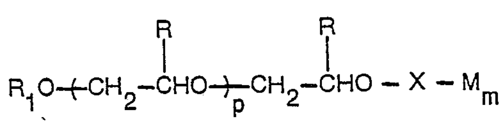

worin p eine ganze Zahl von 0 bis 50 ist, R Wasserstoff oder Niedrigalkyl ist, X ein Schwefel-oder Phosphorderivat der Formel:

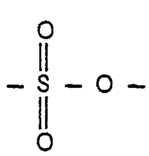 oder 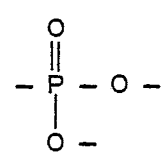

m entweder 1 oder 2 ist, und $R_1$ und M die vorstehend angegebene Bedeutung besitzen.

7. Schäumbare Zusammensetzung nach Anspruch 1, dadurch gekennzeichnet, daß das Schaummittel ausgewählt ist aus Block- und Pfropfcopolymeren von Polyoxyalkyl und Polydialkylsiloxygruppen der Formel:

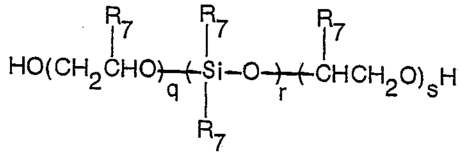

worin $R_7$ Niedrigalkyl und q, r und s ganze Zahlen von 2 bis 100 bedeuten, oder

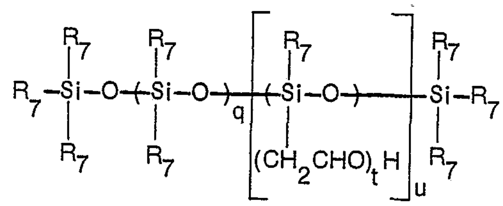

worin t und u ganze Zahlen von 2 bis 100 sind, und $R_7$ und q die oben angegebene Bedeutung besitzen.

8. Schäumbare Zusammensetzung nach Anspruch 1, dadurch gekennzeichnet, daß das Schaummittel ein oberflächenaktives Mittel auf der Basis Fluorkohlenstoff ist.

9. Schäumbare Zusammensetzung nach Anspruch 2, dadurch gekennzeichnet, daß das Verdickungsmittel ein Zellulosederivat umfaßt.

10. Schäumbare Zusammensetzung nach Anspruch 1, dadurch gekennzeichnet, daß die Zusammensetzung eine im wesentlichen flüssigkeitsfreie Mischung umfaßt, die bei Zugabe eines flüssigen Mediums einen Schaum bilden kann.

11. Konzentratzusammensetzung zur Bildung eines Schaums, der zum Schaumfärben, -appretieren oder -drucken geeignet ist, enthaltend eine im wesentlichen flüssigkeitsfreie Mischung eines Schaumsystems und ein Appreturmittel, dadurch gekennzeichnet, daß das Schaumsystem aus einem Schaummittel, einem Schaumstabilisator und/oder Verdiker besteht, das Gewichtsverhältnis der aktiven Feststoffe zu dem Schaumsystem mindestens 8:1 ist, und die Zusammensetzung in einen Schaum überführt werden kann, der ausreichend stabil ist, um seine Eigenschaften während der Applikation auf das Gewebe im wesentlichen beizubehalten und innerhalb der Zeit, zu der das anfängliche Schäumen erfolgt und der Zeit, zu der der Schaum in das Gewebe eingebracht wird, nicht zusammenbricht.

12. Konzentratzusammensetzung nach Anspruch 11, dadurch gekennzeichnet, daß das Verhältnis der aktiven Feststoffe zum schäumenden System zwischen 10:1 und 2000:1 liegt.

13. Konzentratzusammensetzung nach Anspruch 11, dadurch gekennzeichnet, daß der Gewichtsprozentgehalt des schäumenden Systems ein solcher ist, daß in der sich aus der Konzentratzusammensetzung ergebenden schäumbaren Zusammensetzung durch Zugabe eines flüssigen Mediums der Gewichtsprozentgehalt des schäumenden Systems geringer als 2,0 ist.

14. Konzentratzusammensetzung nach Anspruch 11, dadurch gekennzeichnet, daß das Konzentrat in einen Schaum überführt werden kann, der ein Aufblasverhältnis im Bereich von 2:1 bis 20:1 hat und eine Schaumdichte im Bereich von 0,5 g/cm$^3$ bis 0,05 g/cm$^3$.

15. Konzentratzusammensetzung nach Anspruch 11, dadurch gekennzeichnet, daß das Schaummittel ausgewählt ist aus Alkylaminoxiden der Formel

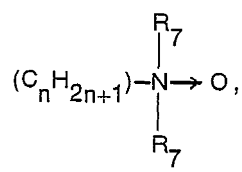 , n = 12 to 24

worin $R_7$ Niederalkyl ist, und Fettsäurebetainen der Formel

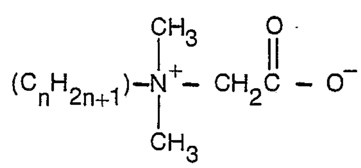

worin n 12 bis 24 ist.

16. Konzentratzusammensetzung nach Anspruch 11, dadurch gekennzeichnet, daß das Schaummittel ausgewählt ist aus Salzen oder Fettsäuren der Formel

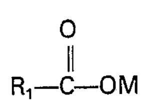

worin $R_1$ ein Kohlenwasserstoffradikal der Formel $C_nH_{2n+1}$, $C_nH_{2n-1}$ oder $C_nH_{2n-3}$ ist, n eine ganze Zahl von 12 bis 24 ist, und M ein Kation der Gruppe I des Periodischen Systems, oxyalkylierten höheren Alkylphenolen der Formel

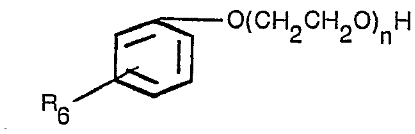

worin n eine ganze Zahl von 10 bis 100 und $R_6$ ein höheres Alkyl ist, und Salzen von oxyalkylierten aliphatischen Alkoholen der Formel

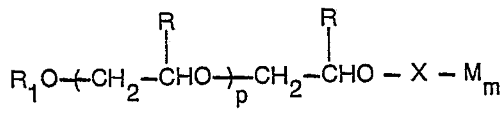

worin p eine ganze Zahl von 0 bis 50 ist, R Wasserstoff oder Niederalkyl ist, X ein Schwefel- oder Phosphorderivat der Formel

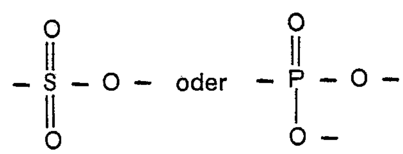

m entweder 1 oder 2 ist und $R_1$ und M die oben angegebene Bedeutung besitzen.

17. Konzentratzusammensetzung nach Anspruch 11, dadurch gekennzeichnet, daß das Schaummittel ausgewählt ist aus Block- und Pfropfcopolymeren von Polyoxyalkyl- und Polydialkylsiloxygruppen der Formel

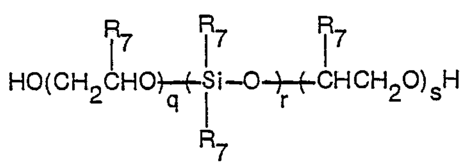

worin $R_7$ Niederalkyl ist und q, r und s ganze Zahlen von 2 bis 100, oder

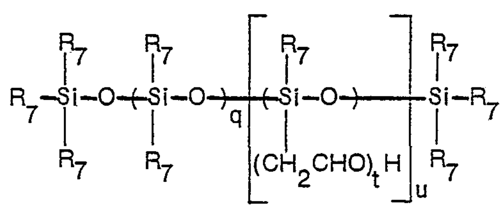

worin t und u ganze Zahlen von 2 bis 100 sind, und $R_7$ und q die oben angegebenen Bedeutungen besitzen.

18. Konzentratzusammensetzung nach Anspruch 11, dadurch gekennzeichnet, daß das Schaummittel ein oberflächenaktives Mittel auf der Basis von Fluorkohlenstoff ist.

19. Verfahren zur Bildung einer Konzentratzusammensetzung nach einem der Ansprüche 11 bis 18, dadurch gekennzeichnet, daß ein Schaummittel und das gewünschte Mittel zu einer im wesentlichen flüssigkeitsfreien Mischung vermischt werden, die bei Zugabe eines flüssigen Mediums und Verschäumen einen stabilen Schaum bildet, der zum Färben, Appretieren oder Bedrucken von Textilmaterialien geeignet ist, und die Mischung ein Gewichtsverhältnis von aktiven Feststoffen zum schaümenden System von mindestens 8:1 besitzt und das Schaummittel Teil des schäumenden Systems ist, das weiters einen Schaumstabilisator und/oder Verdicker enthält.

**Revendications**

1. Composition expansible qui est capable d'être amenée sous forme d'une mousse convenable pour traiter des tissus au moyen d'un agent d'ensimage qui comprend une quantité prédéterminée d'agent d'ensimage de tissu suffisante pour conférer l'ensimage désiré au tissu et jusqu à 10 pourcent en poids d'agent moussant et ayant un rapport pondéral de matières solides actives à l'agent moussant total d'au moins 8:1, caractérisée en ce que la composition expansible est capable d'être amenée à l'état d'une mousse qui est suffisamment stable pour conserver notablement ses caractéristiques pendant son application au tissu et pour ne pas se détruire entre le moment où la formation de mousse initiale a lieu et le moment où la mousse est introduite dans les tissus.

2. Composition expansible selon la revendication 1, dans laquelle ledit agent moussant est un partie

d'un système gonflant qui comprend de plus un stabilisant de mousse et/ou un épaississant contenu dedans.

3. Composition expansible selon la revendication 2, dans laquelle le rapport pondéral des matières solides actives audit système moussant est entre 10:1 et 2000:1.

4. Composition expansible selon la revendication 2, dans laquelle le pourcentage en poids dudit système moussant est inférieur à 2,0 pourcent.

5. Composition expansible selon la revendication 1, dans laquelle ladite composition est capable d'être amenée à l'état d'une mousse ayant un rapport de soufflage dans la gamme d'environ 2:1 à 20:1 et une densité de mousse dans la gamme de 0,5 g/cm$^3$ à 0,05 g/cm$^3$.

6. Composition expansible selon la revendication 1, dans laquelle ledit agent moussant est choisi parmi les sels d'acides gras représentés par la formule:

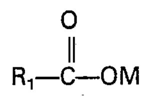

dans laquelle $R_1$ est un radical hydrocarbure de formule $C_nH_{2n+1}$, $C_nH_{2n-1}$ ou $C_nH_{2n-3}$, n est un nombre entier de 12 à 24, et M est un cation du groupe I du Système Périodique, des alcoyl phénols supérieurs oxyalcoylés de formule:

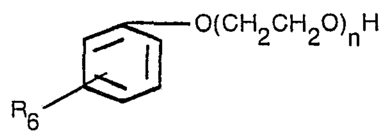

dans laquelle n est un nombre entier de 10 à 100 et $R_6$ est un alcoyle supérieur, et des sels d'alcools aliphatiques oxyalcoylés de formule:

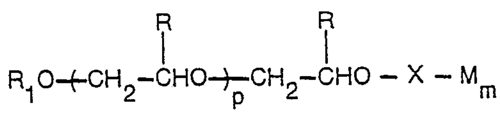

dans laquelle p est un nombre entier de 0 à 50, R est l'hydrogène ou un alcoyle inférieur, X est un dérivé du soufre ou du phosphore de formule

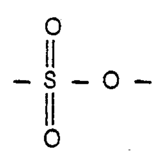 or 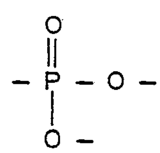

m est soit 1 soit 2 et $R_1$ et M sont tels que définis précédemment.

7. Composition expansible selon la revendication 1, dans laquelle ledit agent gonflant est choisi parmi des copolymères sequencés et greffés de groupes polyoxyalcoyle et polydialcoylsiloxy de formule:

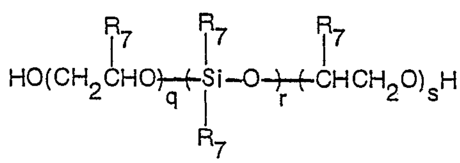

dans laquelle $R_7$ est un alcoyle inférieur et q, r et s sont des nombres entiers de 2 à 100, ou

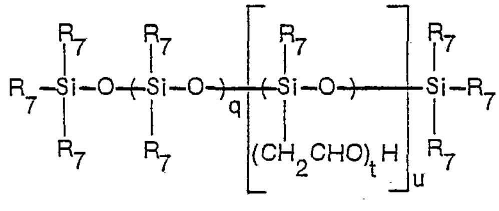

dans lequel t et u sont des nombres entiers de 2 à 100, et $R_7$ et q sont tels que définis ci-dessus.

8. Composition expansible selon la revendication 1 dans laquelle ledit agent moussant est un tensioactif du type fluorocarbone.

9. Composition expansible selon la revendication 2 dans laquelle ledit épaississant comprend un dérivé cellulosique.

10. Composition expansible selon la revendication 1 dans laquelle ladite composition comprend un mélange pratiquement exempt de liquide capable de gonfler lors de l'addition d'un milieu liquide.

11. Une composition concentrée pour former une mousse convenable pour la teinture, l'ensimage ou l'impression d'une mousse qui comprend un mélange pratiquement exempt de liquide d'un système de mousse et d'un agent d'ensimage, caractérisée en ce que le système moussant est composé d'un agent moussant d'un stabilisant et/ou d'un épaississant de mousse, le rapport pondéral des matières solides actives audit système gonflant étant au moins 8:1, et ladite composition étant capable d'être amenée à l'état d'une mousse qui est suffisamment stable pour conserver pratiquement ses caractéristiques pendant son application au tissu et pour ne pas se détruire entre le moment où l'expansion initiale a lieu et le moment où la mousse est introduite dans les tissus.

12. Composition concentrée selon la revendication 11, dans laquelle le rapport des matières solides actives audit système gonflant est entre 10:1 et 2000:1.

13. Composition concentrée selon la revendication 11, dans laquelle le pourcentage en poids dudit système gonflant est tel que, dans la composition expansible résultant de la composition concentrée, en ajoutant un milieu liquide, le pourcentage en poids du système moussant est inférieur à 2,0.

14. Composition concentrée selon la revendication 11, dans laquelle ledit concentré est capable d'être amené à l'etat d'une mousse ayant un rapport de soufflage dans la gamme d'environ 2:1 à 20:1 et une densité de mousse dans la gamme de 0,5 g/cm$^3$ à 0,05 g/cm$^3$.

15. Composition concentrée selon la revendication 11 dans laquelle ledit agent moussant est choisi parmi des oxydes d'alcoylamines de formule:

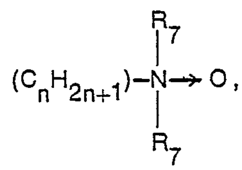 $n = 12$ to 24

dans laquelle $R_7$ est un alcoyle inférieur, et des bétaines d'acides gras de formule:

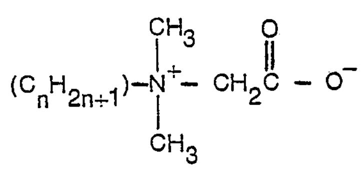

dans laquelle n est de 12 à 24.

16. Composition concentrée selon la revendication 11, dans laquelle agentmoussant est choisi parmi des sels d'acides gras représentés par la formule

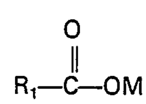

dans laquelle $R_1$ est un radical hydrocarbure de formule $C_nH_{2n+1}$, $C_nH_{2n-1}$ ou $C_nH_{2n-3}$, n est un entier de 12 à 24, et M est un cation du groupe I du Système Périodique, des phénols alcoyl supérieurs oxyalcoylés de formule:

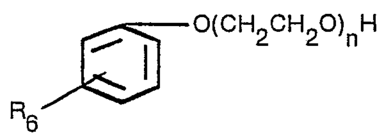

dans laquelle n est un entier de 10 à 100 et $R_6$ est un alcoyl supérieur, et des sels d'alcools aliphatiques oxyalcoylés de formule:

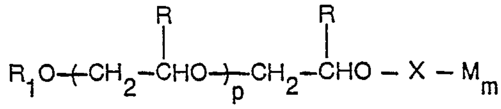

dans laquelle p est un entier de 0 à 50, R est l'hydrogène ou un alcoyle inférieur, X est un dérivé du soufre ou du phosphore de formule:

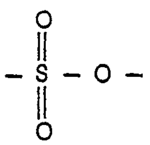

or

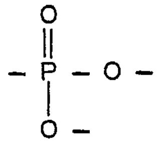

m est soit 1 soit 2, et $R_1$ et M sont tels que définis précédemment.

17. Composition concentrée selon la revendication 11, dans laquelle ledit agent moussant est choisi parmi des copolymères séquencés et greffés de groupes polyoxyalcoyle et polydialcoylsiloxy de formule:

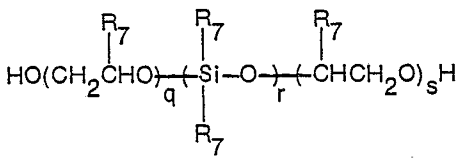

dans laquelle $R_7$ est un alcoyle inférieur et q, r et s sont des entiers de 2 à 100, ou

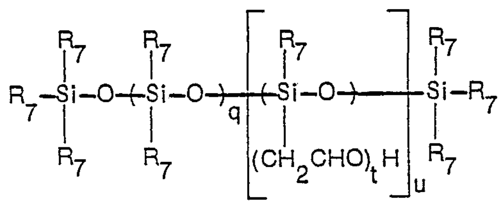

dans lequel t et u sont des entiers de 2 à 100, et $R_7$ et q sont tels que définis ci-dessus.

18. Composition concentrée selon la revendication 11 dans laquelle ledit agent moussant est un tensioactif du type fluorocarbone.

19. Procédé de formation d'une composition concentrée selon l'une quelconque des revendications 11 à 18, caractérisé en ce qu'un agent moussantet l'agent désiré sont mélangés en un mélange pratiquement exempt de liquide qui par addition d'un milieu liquide et expansion forme une mousse stable convenable pour teindre, ensimer ou imprimer des matières textiles, ledit mélange ayant un rapport pondéral de matières solides actives audit système moussant d'au moins 8:1, ledit agent moussant étant une partie dudit système moussant qui comprend de plus un stabilisant et/ou un épaississant de mousse incorporé dedans.